# EUROPEAN PATENT SPECIFICATION

(11) **EP 2 581 289 B1**
(45) Date of publication and mention of the grant of the patent: **16.04.2014**
(21) Application number: 11425247.1
(22) Date of filing: 10.10.2011
(51) Int. Cl.: B61B 12/06, G01N 27/83

(54) **Instrument for a magneto inductive control of a metal cable**
Gerät für magnetisch-induktive Kontrole von Stahlseilen
Dispositif de controle magnétique-inductif de câbles en acier

(43) Date of publication of application: 17.04.2013
(73) Proprietor: Ditta Serri, 34016 Trieste (IT)
(72) Inventor: Serri, Roberto, I-34016 Trieste (IT)
(74) Representative: Ferraiolo, Ruggero

(56) References cited:
- EP-A1- 0 134 341
- WO-A1-93/19380
- US-A- 3 424 976
- US-A- 5 321 356

## Description

### Field of the Invention

The present invention refers to an instrument suitable for carrying out a magneto inductive control of metal cables, in particular, of loaded metal cables as those installed on any type of cableway designed for transporting people or things or of guy ropes for tenso-structures.

If the invention is applicable in particular to a magneto inductive control of the above mentioned cables, it can be implemented also on other instruments based on the same operating principle.

### The prior art

The latest conventional instruments comprise the following basic means: permanent magnets, pole shoes and/or magnetic yokes that, aside closing the magnet circuit, form the case of the instrument and sensors suitable for detecting the magnetic dispersed flux. An electronic system is associated to the instruments that acquires and registers the signals delivered from the sensors. Such instruments, sometimes sliding on wheels weighing on the cable under control or adapted to slide directly on the latter, are moved along the cable by an operator positioned on means fixed to the cable itself, for instance on a trolley of a cableway; alternatively, such means are anchored to a stationary point and the cable moves within the instrument, as it happens, for instance, in controlling the cables of an elevator. In both cases the instrument is completely closed around the cable while operating.

Prior art instruments according to the preamble of claim 1 are known for instance from US-A-5 321 356.

### Drawbacks of the prior art

The known instruments are affected by the main drawback that any obstacle associated to the cable under control implies stopping the movement of the instrument along the cable or stopping the running of the cable, removing the instrument and subsequently, once the obstacle is overcome, repositioning it on the cable. Such a drawback causes notable difficulties in using an instrument in particular in the new generation cableways which are characterized by very long cable spans. It should be considered that the control operations are carried out at great heights over the ground and under difficult conditions since use of any auxiliary lifting means is not possible. Alternatively, equipments capable to overcome said obstacles are known, but they do not get fair signals from the cable portions near an obstacle, before and after it; such equipments, indeed, need a substantial variation of their setting for overcoming an obstacle without removing it, but are subject to loss of signal reading along the cable for several metres before and after the obstacle. Additionally, such equipments are characterized by notable weights and sizes as the electro pneumatic systems they need for varying their setting result in slow and not so reliable operation.

### Background of the Invention

The invented instrument is conventionally provided with means suitable for supporting permanent magnets, magnetic yokes, polar shoes and sensors, all such means, with the instrument in working position, being symmetrically positioned with respect to a median longitudinal vertical plane so as to receive between themselves a cable to be controlled and is characterized in that the sensors are movable between a first closed position when the instrument is sliding along the free cable, a second open position when the instrument is travelling on an obstacle associated to the cable and a third closed position restoring the first one once the obstacle is overcome, the magnetic yokes being removable from the respective seats, in particular comprising:
- at least one means suitable for supporting a respective couple of sensors that, located within the permanent magnets, is provided with an articulation means in the centre which separates it in two symmetrically equal half parts and is allowed to open and close under the control of a return spring that is forced once the means supporting the sensors is open and is active when said means is closed.
- elements that open and close the means suitable for supporting the couples of sensors, which means comprise at least a couple of sliding elements each fixed to the end opposite to said articulation means and go away one from the other by overcoming the resistance of the return spring on encountering an obstacle associated to the cable for sliding on the obstacle and being drawn closer again when the return spring draws in closing position said sensor supporting means as the sliding elements overcome the obstacle.

Therefore, the opening movement of the means that support the sensors is completely automatic thanks to the sliding elements that go away one from the other as the instrument encounters an obstacle which, associated to the cable, interferes with the sliding elements, regardless of the two possible directions of the instrument along the cable. Said opening movement is immediate and lasts exactly a time corresponding to the travelling time of the instrument on the obstacle. The cable control substantially is maintained along said travelling with an almost total efficiency when the opening apart of the sliding elements is of small entity and with an efficiency decreasing gradually, nevertheless sensitive always, depending on the increase of the obstacle dimensions. A low reading power could arise, but only if caused by the nature of the obstacle; in fact, if the latter is of ferromagnetic material, the reading of the dispersed flux sensed by the sensors could be prevented.

Moreover, the instrument comprises guide means for the magnetic yokes suitable for assembling them correctly and quickly in their respective seats on the instrument and, similarly, for removing them therefrom. As it is known, the magnetic yokes maintain their position thanks to the magnetic pull so that no clamping device is required in the instrument.

So, the magnetic yokes may be assembled on the instrument, by using said guide means, after mounting the rest of the instrument on the cable to be controlled. Once the cable control is accomplished, first the magnetic yokes and then the rest of instrument are removed from the cable. The advantages offered by said procedure will be pointed out in a following part of the description.

A conventional electronic system is associated to the instrument which acquires and registers the signals sent from the sensors.

Still conventionally, the instrument is provided with a sort of carter in the shape of a turned U whose scope is to protect it from the action of undesired elements as dirt and impacts of foreign objects.

### Advantages of the Invention

The invention allows the following advantages:
- Notable increase in the safety for the operators attending to the cable control. The instrument is assembled on and removed from a cable in a station and not along the travelling along a cable. The stations are provided always with easy walkways and suitable lifting means. When carrying out a cable control the operators are in a protected position.
- Satisfactory performance of the instrument on last generation plants too. The elements that connect a cable with a support are not a problem for the travelling of the instrument.
- The control can be extended to portions of a cable not accessible with conventional instruments. The sensors in working position surround a cable and are consequently capable to assure a substantially uniform coverage to the control purpose. The automatic system with the sliding elements makes the sensors set in the open position by a time strictly necessary for overcoming an obstacle, so allowing a complete reading of the cable parts immediately before and after the obstacle.
- Weight lowering: on setting the instrument on a cable, the weight to be handled results well lower than in conventional instruments. In fact, the yokes are applied on the instrument after setting it on the cable and other handlings for setting the instrument are no longer required. The same happens in the steps for removing the instrument from a cable: first the yokes are disjoined from their seats and then the lightened instrument is removed.

### Detailed description of the Invention

The invention will be now described in detail by way of an example of a preferred embodiment and with reference to the accompanying diagrammatic drawings in which:
- Fig. 1 is a first longitudinal partly cross-sectioned view,
- Fig. 2 is a first front view, partly cross-sectioned according to A-A of Fig. 1,
- Fig. 3 is a second front view, partly cross-sectioned according to A-A of Fig. 1,
- Fig. 4 is a third front view,
- Fig. 5 is a second longitudinal view and
- Fig. 6 is a fourth front view.

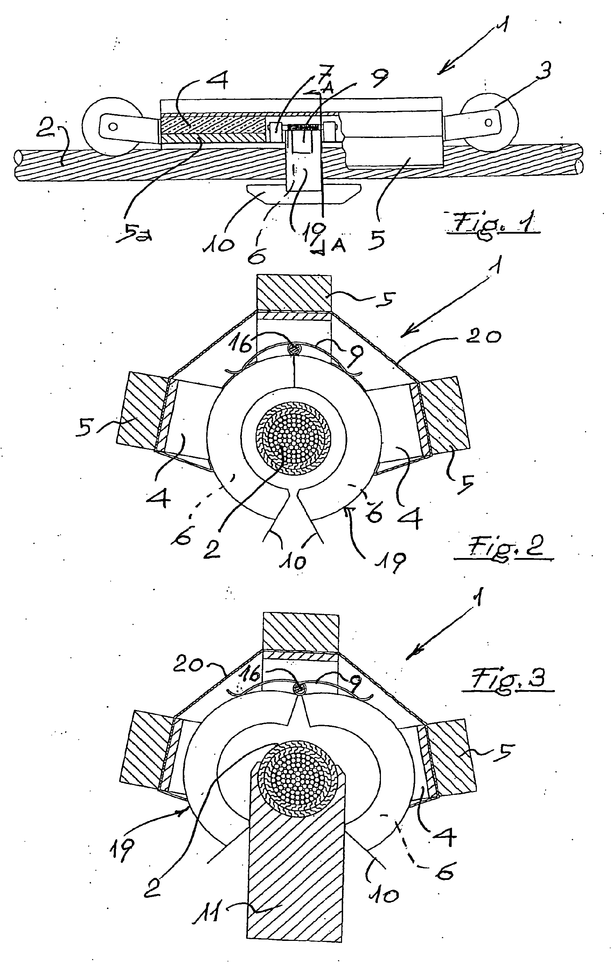

Fig. 1 shows: an instrument 1 set sliding on a cable 2 through two suitable wheels 3; one of the permanent magnets 4; one of the removable magnetic yokes 5; one of the polar shoes 5a; one of the sensors 6 held in the supporting means 19 articulated with a pin 16 rotatable on the opposite supports 7; a return spring 9 acting on the two parts of the supporting means 19 for the sensors, in correspondence with their articulation; a sliding element 10 in the shape of a guide shoe.

Figs. 2 and 3 show, respectively, the instrument 1 wherein the sensors 6 are in the sliding position along the free cable 2, substantially closed around the cable, and are away one from the other in an open position since the instrument encountered along its travelling the obstacle 11 in the form of a cable supporting shoe. A return spring 9 is shown in Fig. 2 that keeps the sensors 6 closed around the cable 2, as it happens along a path without obstacles, whilst in Fig. 3 the same spring 9 appears deformed due to the opening of the sensors and is prepared to reposition the latter in the original position once the instrument passed the obstacle 11. The two figures also show the permanent magnets 4, removable magnetic yokes 5, and sliding element 10 in the shape of a guide shoe and the pin 16 around which the sensor supporting means 19 rotate. A structure 20 is shown that supports the permanent magnets, the removable magnetic yokes, the polar shoes and other auxiliary fittings.

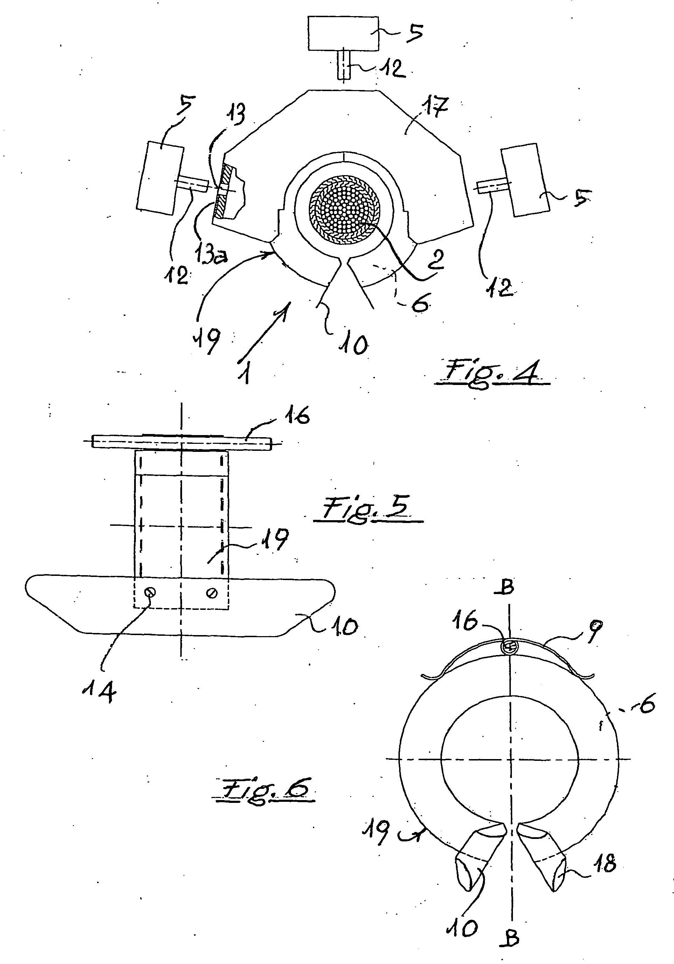

Fig. 4 shows the guide means 12, 13 for assembling the magnetic yokes 5 into their seats 13a in the instrument. The parts described in the Figures 1 and 2 already have the same reference numbers in this figure, while 17 refers to a carter which protects the instrument.

Fig. 5 shows a sliding means 10 in the shape of a guide shoe fastened to the support 19 of a sensor 6 by screws 14, the support 19 being rotatable around pin 16.

Fig. 6 shows two opposite guide shoes 10, each fastened to a support 19 of a sensor 6 and bearing bevels 18 which make soft the impact of the guide shoe on the obstacle. The return spring 9 and the pin 16 are also shown. The median longitudinal vertical plane B-B in the instrument is also shown in this figure.

## Claims

1. Instrument (1) for a magneto inductive control of a metal cable (2) provided with means (3) that make the instrument slide on the cable, permanent magnets (4), magnetic yokes (5), polar shoes (5a) and sensors (6) suitable for sensing the dispersed magnetic flux, all said means (4, 5, 5a, 6) being symmetrically positioned with respect to the median longitudinal vertical plane (B-B) in the instrument in working position so as to receive a cable (2) to be controlled within them and is **characterized in that** the sensors (6) are movable among a first closed position when the instrument is sliding along the free cable (2), a second open position when the instrument is travelling on an obstacle (11) associated to the cable and a third closed position restoring the first one, the instrument comprising:
- at least one couple of means (19) each suitable for supporting a respective sensor (6), which couple, located between the permanent magnets (4), is provided with an articulation means (16) in the centre which separates it in two symmetrically equal half parts and is allowed to open and close under the control of a return spring (9) that is forced once the instrument travels on the obstacle (11) and is active once the instrument is no longer on the obstacle.
- elements suitable for opening and closing the means (19) that support the couple of sensors (6), which means comprise at least one couple of sliding means (10) each fastened at the end opposite to said articulation means (16) and capable to go away from the other means by overcoming the return spring (9) resistance when it encounters an obstacle (11) associated to the cable (2) for sliding on the obstacle and being drawn closer again when the return spring (9) draws in closing position said sensor supporting means (19) as the sliding elements (10) overcome the obstacle (11).

2. Instrument (1) according to claim 1 **characterized in that** guiding means (12, 13) are comprised which are suitable for assembling and removing the yokes (5) and the polar shoes (5a) on and from their respective seats (13a).

## Patentansprüche

1. Instrument (1) für eine magnetisch-induktive Prüfung eines Metallkabels (2), das mit Mitteln (3), die das Instrument auf dem Kabel gleiten lassen, Permanentmagneten (4), magnetischen Jochen (5), Polschuhen (5a) und Sensoren (6), die geeignet sind, den dispergierten magnetischen Fluss abzutasten, versehen ist, wobei alle diese Mittel (4, 5, 5a, 6) in Bezug auf die vertikale Längsmittelebene (B-B) in einer Arbeitsposition symmetrisch in dem Instrument angeordnet sind, um ein zu prüfendes Kabel (2) im Inneren von ihnen aufzunehmen, und **dadurch gekennzeichnet ist, dass** die Sensoren (6) zwischen einer ersten geschlossenen Stellung, wenn das Instrument entlang des freien Kabels (2) gleitet, einer zweiten geöffneten Stellung, wenn das Instrument auf einem mit dem Kabel verbundenen Hindernis (11) läuft, und einer dritten geschlossenen Stellung, die die erste wiederherstellt, bewegbar sind, wobei das Instrument Folgendes umfasst:
- zumindest ein Paar Mittel (19), die jeweils geeignet sind, einen zugehörigen Sensor (6) zu tragen, wobei das Paar, das zwischen den Permanentmagneten (4) angeordnet ist, in der Mitte mit einem Gelenkmittel (16) versehen ist, das es in zwei symmetrisch gleiche Hälften teilt und unter der Steuerung einer Rückstellfeder (9), die gespannt ist, sobald das Instrument auf dem Hindernis (11) läuft, und aktiv ist, sobald sich das Instrument nicht länger auf dem Hindernis befindet, geöffnet und geschlossen werden kann,
- elemente, die zum Öffnen und Schließen der Mittel (19), die das Paar Sensoren (6) tragen, geeignet sind, wobei die Mittel zumindest ein Paar Gleitmittel (10) umfassen, die jeweils an dem Ende, das dem Gelenkmittel (16) gegenüber liegt, befestigt sind und geeignet sind, sich von den anderen Mitteln durch Überwinden des Widerstands der Rückstellfeder (9) zu entfernen, wenn es auf ein mit dem Kabel (2) verbundenes Hindernis (11) trifft, um auf dem Hindernis zu gleiten, und wieder näher zusammengezogen zu werden, wenn die Rückstellfeder (9) die sensortragenden Mittel (19) in eine geschlossene Stellung zieht, sobald die Gleitelemente (10) das Hindernis (11) überwinden.

2. Instrument (1) gemäß Anspruch 1, **dadurch gekennzeichnet, dass** Führungsmittel (12, 13) umfasst sind, die geeignet sind, die Joche (5) und die Polschuhe (5a) an ihren jeweiligen Aufnahmen (13a) zu befestigen und von ihren jeweiligen Aufnahmen (13a) zu entfernen.

## Revendications

1. Instrument (1) de contrôle magnéto inductif d'un câble métallique (2) équipé de moyens (3) permettant de faire glisser l'instrument sur le câble, d'aimants permanents (4) de culasses magnétique (5), de semelles polaires (5a) et de capteurs (6) susceptibles de détecter le flux magnétique dispersé, tous ces moyens (4, 5, 5a, 6) étant positionnés symétriquement par rapport au plan longitudinal médian vertical (B-B) lorsque l'instrument est en position de travail pour recevoir un câble (2) devant être contrôlé à leur partie interne,
**caractérisé en ce que**
les capteurs (6) sont mobiles entre une première position fermée lorsque l'instrument glisse le long du câble libre (2), une seconde position ouverte lorsque l'instrument se déplace sur un obstacle (11) associé au câble et une troisième position fermée rétablissant la première, l'instrument comprenant :
- au moins une paire de moyens (19) susceptibles chacun de supporter un capteur (6) respectif, cette paire, positionnée entre les aimants permanents (4) étant équipée de moyen d'articulation (16) à sa partie centrale qui la sépare en deux demi parts symétriquement égales et étant susceptible de s'ouvrir et de se fermer sous la commande d'un ressort de rappel (9) qui est contraint lorsque l'instrument se déplace sur un obstacle (11) et est actif lorsque l'instrument n'est plus sur l'obstacle,
- des éléments susceptibles d'ouvrir et de fermer les moyens (19) qui supportent la paire de capteurs (6), ces moyens comprenant au moins une paire de moyens glissants (10) fixés chacun à l'extrémité opposée aux moyens d'articulation (16), et susceptibles de s'écarter des autres moyens en surmontant la résistance du ressort de rappel (9) lorsqu'ils rencontrent un obstacle (11) associé au câble (2) pour glisser sur l'obstacle, et étant à nouveau tirés plus près de ces moyens lorsque le ressort de rappel (9) entraine les moyens de support de capteur (19) dans la position fermée lorsque les éléments de glissement (10) contournent l'obstacle (11).

2. Instrument (1) conforme à la revendication 1,
**caractérisé en ce qu'**
il est prévu des moyens de guidage (12, 13) qui sont susceptibles d'assembler et d'extraire les culasses (5) et les semelles polaires (5a) sur et de leurs sièges respectifs (13a).
